# EUROPÄISCHE PATENTSCHRIFT

(11) **EP 0 563 665 B1**
(45) Veröffentlichungstag und Bekanntmachung des Hinweises auf die Patenterteilung: **21.02.1996**
(21) Anmeldenummer: 93104143.8
(22) Anmeldetag: 13.03.1993
(51) Int. Cl.: A47J 43/046, A47J 43/08

(54) **Schlag- und Mischeinrichtung für eine Vielzweckküchenmaschine**
Beating and mixing device for multi-purpose food processor
Dispositif batteur-mélangeur pour robot de cuisine

(30) Priorität: 02.04.1992 DE 4210888
(43) Veröffentlichungstag der Anmeldung: 06.10.1993
(73) Patentinhaber: Braun Aktiengesellschaft, Frankfurt am Main (DE)
(72) Erfinder: Golob, Jürgen, W-6382 Friedrichsdorf (DE)

(56) Entgegenhaltungen:
- EP-A- 0 063 257
- EP-A- 0 217 132
- CH-A- 431 843
- DE-B- 1 066 961
- DE-C- 837 451
- NL-C- 112 849
- US-A- 1 444 910
- US-A- 2 003 829
- US-A- 2 858 861
- US-A- 3 393 900

## Beschreibung

Die Erfindung bezieht sich auf eine Schlag- und Mischeinrichtung für eine Vielzweckküchenmaschine mit mindestens einem um die Mittelachse eines Behälters und um seine eigene Achse drehbaren ersten Arbeitswerkzeug, das zum Zubereiten, Rühren, Schlagen und/oder Zerkleinern von Nahrungsmitteln dient, mit einer von einem Elektromotor angetriebenen, in den Behälter vom Boden her über einen rohrförmigen Schacht hineinragenden Hauptantriebswelle und mit einem in einem Getriebegehäuse aufgenommenen, um die Mittelachse drehendes Getriebe, wobei eine Welle des Getriebes mit der Hauptantriebswelle und ein Antriebsrad des Getriebes mit dem ersten Arbeitswerkzeug kuppelbar ist, und wobei das erste Arbeitswerkzeug mit einem zweiten, als Abweiser ausgebildeten Arbeitswerkzeug zusammenwirkt, das am Getriebegehäuse ausgebildet ist.

Eine derartige Schlag- und Mischeinrichtung für eine Vielzweckküchenmaschine ist bereits aus der EP-0 217 132 B1 bekannt, bei der sowohl zwei erste um die Mittelachse des Behälters rotierende wie um die eigene Achse drehende Arbeitswerkzeuge und ein lediglich um die Mittelachse des Behälters rotierendes zweites Arbeitswerkzeug bekannt sind. Dabei sind die beiden ersten Arbeitswerkzeuge dem rohrförmigen Schacht benachbart, während das zweite Arbeitswerkzeug in geringem Abstand zur Außenwandung des Behälters rotiert, d.h., die ersten Arbeitswerkzeuge (Schneebesen) sind zwischen dem zweiten Arbeitswerkzeug (Abweiser) und dem rohrförmigen Schacht des Behälters angeordnet.

Diese Anordnung führt dazu, daß, wenn der rohrförmige Schacht sich nicht wie in den Figuren 2, 4 und 8 der EP-0 217 132 B1 rechtwinklig vom Boden des Behälters nach oben erstreckt, sondern sich beispielsweise kegelstumpfförmig nach oben verjüngt, die ersten Arbeitswerkzeuge nach der EP-0 217 132 B1 der Kontur des Schachtes folgen müßten, wenn nicht ein Totraum zwischen den ersten Arbeitswerkzeugen und dem rohrförmigen Schacht entstehen soll. Da aber die ersten Arbeitswerkzeuge auch noch um ihre eigene Achse rotieren, würde, wenn die Drahtbügel dann im wesentlichen der Kontur des Schachtes folgen, im Bereich des schrägen Verlaufs ein unnötig großer Freiraum zwischen dem außen angeordneten zweiten Arbeitswerkzeug und den schräg nach oben verlaufenden Drahtbügeln entstehen. Dies führt dann letztendlich zu schlechteren Rührergebnissen, insbesondere dann, wenn geringe Mengen an Nahrungsmitteln verrührt oder geschlagen werden sollen.

Weiterhin ist aus der US-PS 2,858,861 eine Küchenmaschine zum Bearbeiten von Nahrungsmitteln bekannt, bei der zwei in einem Behälter in entgegengesetzter Richtung drehende Arbeitswerkzeuge angetrieben werden, die mit ihren Armen im wesentlichen der Innenkontur des Behälters angepaßt sind und die lediglich um die Mittelachse des Behälters rotieren. Eine intensive Durchmischung und/oder Einbringung von Luft in die Nahrungsmittel in kürzester Zeit ist daher bei dieser Küchenmaschine nicht möglich.

Aufgabe der Erfindung ist es nun, eine Schlag- und Mischeinrichtung für eine Vielzweckküchenmaschine zu schaffen, bei der dann, wenn die Übergänge vom Boden zur Außenwandung und vom Boden zum Schacht unterschiedlich geformt sind, dennoch die im Behälter sich befindenden Nahrungsmittel von der Schlag- und Mischeinrichtung schnellstens erfaßt und in kürzester Zeit geschlagen und/oder verrührt werden.

Gelöst wird die Aufgabe erfindungsgemäß dadurch, daß der Abweiser zwischen dem ersten Arbeitswerkzeug und dem Schacht angeordnet ist, daß erste das Arbeitswerkzeug an den Konturenverlauf am Übergang vom Boden zur Außenwandung des Behälters im wesentlichen angepaßt ist, daß der Abweiser mit seiner dem Schacht benachbarten Seite der Kontur des Schachtes in geringem Abstand folgt und daß der rohrförmige Schacht sich vom Boden des Behälters nach oben verjüngt bzw. erweitert. Verjüngt sich also der Schacht im Behälter nach oben, so werden durch die erfindungsgemäße Anordnung in Bodennähe zwischen dem Schacht, dem zweiten Arbeitswerkzeug, dem ersten Arbeitswerkzeug und der Außenwandung des Behälters Freiräume vermieden, so daß auch bei kleinen im Behälter befindlichen Mengen von Nahrungsmitteln diese stets bei jeder Umdrehung der ersten und zweiten Arbeitswerkzeuge im Behälter vollständig erfaßt werden. Es entstehen also nach der Erfindung keine unnötigen Freiräume zwischen diesen Teilen. Dies führt dann letztendlich auch zu dem entscheidenden Vorteil, daß als erstes Arbeitswerkzeug nur ein einziger Schneebesen benötigt wird, was die Kosten der erfindungsgemäßen Schlag- und Mischeinrichtung erheblich reduziert.

Gemäß der Erfindung wird auf einfache Weise auch mit nur einem drehbaren Arbeitswerkzeug, insbesondere mit einem Schneebesen oder Pürierwerkzeug, sichergestellt, daß das Nahrungsmittelgut in kürzester Zeit zubereitet werden kann, zumal das rotierende Arbeitswerkzeug nunmehr außen, d.h., zwischen der Seitenwand des Behälters und dem Abweiser vorgesehen ist. Das durch den Rotationsvorgang des Arbeitswerkzeugs nach außen zur Wand des Behälters bewegte Nahrungsmittelgut wird stets vom Arbeitswerkzeug sofort wieder erfaßt und bearbeitet, während gleichzeitig der Abweiser dafür sorgt, daß das Nahrungsmittelgut ebenfalls zum rotierenden Arbeitswerkzeug zurückbewegt wird. Auf diese Weise wird das Nahrungsmittelgut unter Verwendung nur zweier Arbeitswerkzeuge wesentlich besser vermischt, geschlagen und püriert und dadurch vermieden, daß nennenswertes Nahrungsmittelgut an den Wänden haften bleibt.

Ferner ist es vorteilhaft, daß das erste Arbeitswerkzeug gegenläufig zum dem am Getriebegehäuse angeordneten, mit diesem umlaufenden Abweiser antreibbar ist. Das durch die Zentrifugalkräfte des rotierenden ersten Arbeitswerkzeugs nach außen geschleuderte Nahrungsmittelgut wird durch das rotierende erste Arbeitswerkzeug ständig erfaßt und bearbeitet, geschlagen, vermischt oder zerkleinert, wobei der Abweiser gleichzeitig dafür sorgt, daß das im Zentrum befindliche Nahrungsmittelgut ebenfalls ständig zum rotierenden ersten Arbeitswerkzeug geleitet wird. Da die Hauptmasse des Nahrungsmittelgutes sich stets nach außen bewegt, wird durch das außen liegende, rotierende erste Arbeitswerkzeug mit einfachen Mitteln sichergestellt, daß auch das an der Außenwand des Behälters haftende Nahrungsmittelgut sofort von dem rotierenden ersten Arbeitswerkzeug erfaßt und dadurch fortlaufend bearbeitet wird.

Gemäß einer Weiterbildung der erfindungsgemäßen Vorrichtung ist es vorgesehen, daß das erste Arbeitswerkzeug über die Ausgangswelle mit einem Antriebsrad antriebsverbunden ist, das über ein Zwischenrad mit einem auf der Hauptantriebsachse angeordneten Ritzel antriebsverbunden ist. Durch diese einfache Zahnradanordnung ist am Ein- und Ausgang gleiche Drehrichtung.

Von besonderer Bedeutung ist für die vorliegende Erfindung, daß der Schacht sich zum Boden des Behälters hin kegelstumpfartig erweitert, so daß auch im Bereich des Bodens des Behälters eine gute Zurückführung des Nahrungsmittelguts zum rotierenden Arbeitswerkzeug sichergestellt wird.

Im Zusammenhang mit der erfindungsgemäßen Ausbildung und Anordnung kann es auch vorteilhaft sein, daß der Schacht im Bereich des Bodens aus einem kegelstumpfartig ausgebildeten Lagerteil und einem sich daran anschließenden zylinderförmigen Lagerteil besteht. Durch diese Anordnung ergibt sich ein einfacher Aufbau des Abweisers.

Vorteilhaft ist es ferner, daß der Abweiser eine Innenkante aufweist, die in etwa mit gleichem Abstand bzw. parallel zum Außenumfang des rohrförmigen Schachtes verläuft. Durch diesen homogenen Verlauf des Schachtes und des Abweisers wird das sich am Schacht ansammelnde Nahrungsmittel stets vom Abweiser vollständig erfaßt und wiederum dem ersten Arbeitswerkzeug zugeführt.

Außerdem ist es vorteilhaft, daß das in dem Getriebegehäuse aufgenommene Getriebe aus dem Antriebsrad zum Anschluß an die als Steckwelle ausgebildete Ausgangswelle für das erste Arbeitswerkzeug, dem Zwischenrad und dem auf der Hauptantriebsachse angeordneten Ritzel besteht, wobei das Zwischenrad über ein mit diesem fest verbundenes zweites Ritzel und einem weiteren, oberhalb des ersten Ritzels angeordneten vierten feststehenden Zahnrad zum Antrieb des Getriebegehäuses in Antriebsverbindung steht.

Durch diese Getriebeanordnung wird erreicht, daß der Abweiser und der Schneebesen mit dem Gehäuse gleichermaßen drehen und daß sich der Schneebesen, außenumfangseitig gesehen, entgegen der Drehrichtung des Gehäuses noch um seine eigene Achse dreht. Dabei ist das vierte Zahnrad im Deckel der Küchenmaschine und auf einem Zapfen des ersten Ritzels gelagert, so daß das vierte Zahnrad drehfest mit dem Deckel des Behälters und die Welle über den Zapfen am vierten Zahnrad drehbar gelagert ist.

In weiterer Ausgestaltung der Erfindung ist es vorteilhaft, daß das am Zwischenrad ausgebildete Ritzel im Getriebegehäuse auf dem vierten, feststehenden Zahnrad abrollt und das Getriebegehäuse antreibt, daß das Übersetzungsverhältnis zwischen dem auf der Hauptantriebswelle angeordneten Ritzel des Getriebeblocks und dem Zwischenrad mindestens 1:2 groß ist, und daß das am Getriebegehäuse angeordnete Ritzel gleichlaufend zum ersten Arbeitswerkzeug angetrieben wird. Hierdurch wird auf einfache Weise das Getriebegehäuse in Drehbewegung versetzt, wodurch beste Rührergebnisse erzielt werden, indem beispielsweise Sahne gleichmäßig im ganzen Behälterraum geschlagen wird.

Vorteilhaft ist es außerdem, daß zwischen dem ersten und zweiten Arbeitswerkzeug ein Spalt vorgesehen ist, der etwa doppelt so groß ist wie der Spalt zwischen der Außenwand des Behälters und der Rotationskontur des ersten Arbeitswerkzeuges. Mit dieser Maßnahme wird ein optimales Schlagergebnis erzielt, wobei bei jeder Umdrehung der Schlag- und Mischeinrichtung möglichst viele Anteile des Rührgutes von den Arbeitswerkzeugen erfaßt werden.

In einer Weiterbildung der Erfindung ist vorgesehen, daß der Abweiser gegenüber der Hohlwelle radial nach außen verläuft und daß die in Drehrichtung vordere Stirnfläche des Abweisers entgegen der Drehrichtung gekrümmt verläuft. Hierdurch werden die Nahrungsmittel von der Mitte aus besonders schnell dem ersten Arbeitswerkzeug wieder zugeführt, so daß eine feste, mit höherem Luftblasenanteil versehene "Sahne" oder ein "Mousse" entsteht

Weitere Vorteile und Einzelheiten der Erfindung sind in der Beschreibung erläutert und in den Figuren dargestellt. Es zeigt:
- Fig. 1: eine perspektivische Darstellung einer Vielweckküchenmaschine mit dem erfindungsgemäßen Arbeitswerkzeug zum Rühren oder Schlagen von Nahrungsmitteln,
- Fig. 2: eine perspektivische Darstellung des Schlag- und Mischwerkzeuges nach Fig. 1 in vergrößerter Darstellung, mit einem ersten antreibbaren Rührwerkzeug und mit einem zweiten, als Abweiser ausgebildeten Arbeitswerkzeug,
- Fig. 3: einen Längsschnitt des Schlag- und Mischwerkzeuges gemäß Fig. 2, wobei jedoch das Schlag- und Mischwerkzeug als in einen Behälter einer Vielzweckküchenmaschine eingesetztes Bauteil dargestellt ist,
- Fig. 4: eine Teildraufsicht auf die Zahnräderanordnung des Getriebegehäuses entlang der Schnittlinie IV-IV gemäß Fig. 3 und
- Fig. 5: eine Teilschnittdarstellung durch die Schlag- und Mischeinrichtung entlang der Schnittlinie V-V gemäß Fig. 3.

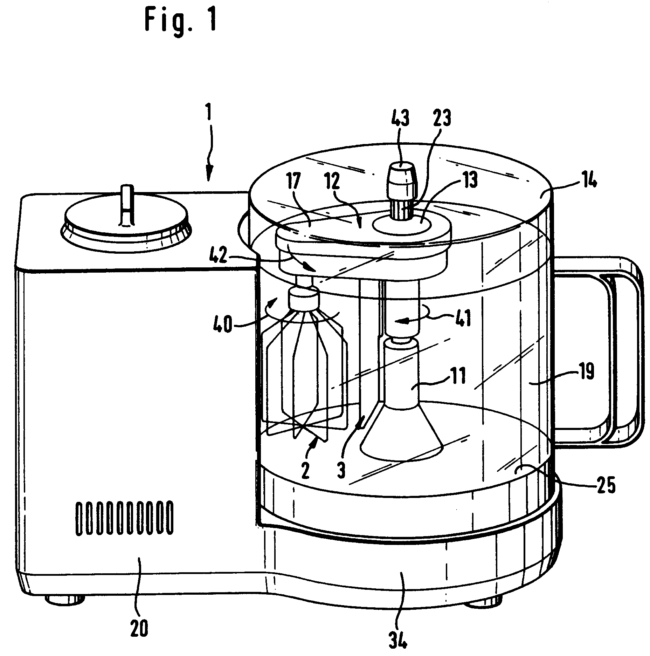

In Fig. 1 ist mit 1 eine Vielzweckküchenmaschine bezeichnet, die aus einem auf einem Gerätesockel 34 angeordneten Motorgehäuse 20 besteht, in dem ein Elektromotor angeordnet ist, der über eine in der Zeichnung nicht dargestellte Getriebeanordnung eine Hauptantriebswelle 6 antreibt, auf der die Schlag- und Mischeinrichtung 5 mittels der Kupplungsanordnung 36 drehfest kuppelbar ist.

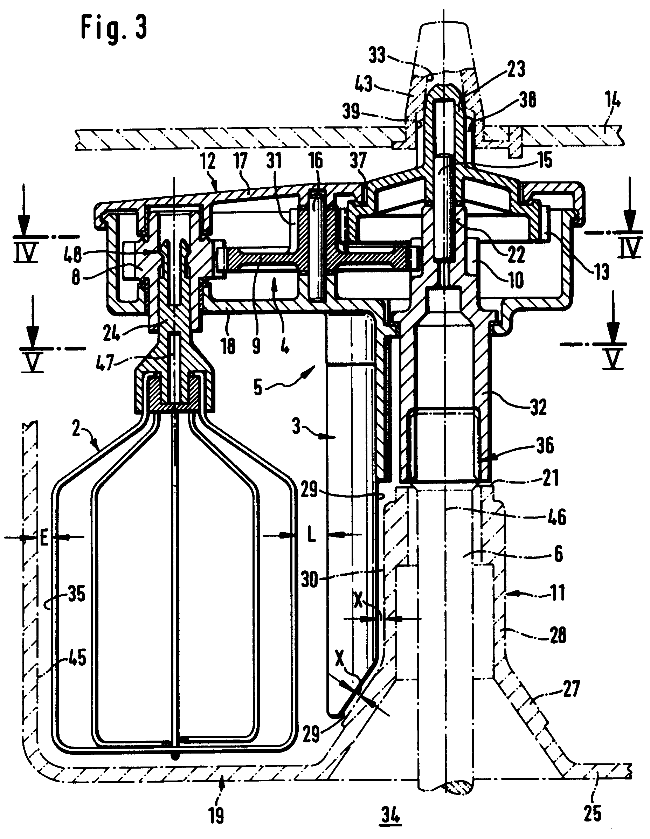

Zur Küchenmaschine 1 gehört nach Fig. 1 ferner ein auf dem Gerätesockel 34 zentrierter Behälter 19, der zur Aufnahme und zum Bearbeiten von Nahrungsmitteln dient, die von dem an der Schlag- und Mischeinrichtung 5 ausgebildeten ersten und zweiten Arbeitswerkzeugen 2, 3 geschlagen bzw. verrührt werden. Das erste Arbeitswerkzeug 2 steht über ein in der Schlag- und Mischeinrichtung 5 ausgebildetes Getriebe 4 (Fig. 3) mit der Hauptantriebswelle 6 der Vielzweckküchenmaschine 1 in Drehverbindung, während das zweite Arbeitswerkzeug 3 am Getriebegehäuse 12 (Fig. 3) ausgebildet ist und somit mit diesem in Antriebsverbindung steht.

Wie aus Figur 3 hervorgeht, besteht die Schlag- und Mischeinrichtung 5 weiterhin aus einer am Boden 18 des Getriebegehäuses 12 nach unten herausragenden Hohlwelle 32, die über die Kupplungseinrichtung 36 mit der Hauptantriebswelle 6 drehfest kuppelbar ist, wobei letztere mit dem in der Zeichnung nicht dargestellten Elektromotor über ein Zahnriemengetriebe in Antriebsverbindung steht.

Nach Fig. 3 durchdringt die Hauptantriebswelle 6 einen im Behälter 19 zentral angeordneten Schacht 11 und ragt am oberen Ende 21 des Schachtes 11 noch in den Behälter 19 hinein. Der Schacht 11 besteht im Bereich des Behälterbodens 25 aus einem nach oben sich kegelstumpfförmig verjüngenden Schachtteil 27 und einem sich daran anschließenden zylinderförmigen Rohrteil 28, die konzentrisch zur Mittelachse 46 des Behälters 19 verlaufen.

An die Hauptantriebswelle 6 ist nach Fig. 3 die Hohlwelle 32 angekuppelt, an deren oberen Ende sich im Getriebegehäuse 12 ein erstes Ritzel 10 befindet, das an seinem oberen Ende eine Bohrung 22 zur Aufnahme eines Zapfens 15 aufweist, auf dem ein Zahnrad 13 gelagert ist. Das Zahnrad 13 durchdringt den Deckel 17 des Getriebegehäuses 12 über die Borhung 37 und weist an seinem oberen Ende einen am Deckel 17 angeformten Lagerzapfen 23 auf, der in einer im Deckel 14 des Behälters 19 in einer Lagerbuchse 43 vorgesehenen Bohrung 33 gelagert ist. Dabei greift eine am Lagerzapfen 23 ausgebildete Verzahnung 38 in eine in der Bohrung 33 entsprechende Verzahnung 39 drehfest ein.

Das Schlag- und Mischwerkzeug 5 besteht nach Fig. 3 aus dem Getriebegehäuse bzw. dem Getriebearm 12, in dem das Getriebe 4 aufgenommenen ist. Zu dem Getriebe 4 gehört ein Antriebsrad 8 zum Anschluß der als Steckwelle ausgebildeten Ausgangswelle 24 für das erste Arbeitswerkzeug 2, ein Zwischenrad 9 und das der Hauptantriebsachse 6 zugeordnete Ritzel 10.

Das gegenüber dem Antriebsrad 8 und dem Ritzel 10 im Durchmesser größere und dazwischenliegende Zwischenrad 9 weist oberhalb des Zwischenrades 9 ein angeformtes zweites Ritzel 31 auf, das an dem feststehenden Zahnrad 13 abrollt und dadurch das Getriebegehäuse bzw. den Getriebearm 12 entgegen der Abtriebsrichtung antreibt. Das Zwischenrad 9 ist auf einer Achse 16 drehbar gelagert, die mit ihrem einen Ende im Deckel 17 und mit ihrem anderen Ende im Boden 18 des Getriebegehäuses 12 aufgenommen ist. Die Ausgangswelle 24 ist über eine Kupplungseinrichtung 48 mit dem Antriebsrad 8 drehfest kuppelbar, so daß beide sich um die Achse 47 drehen

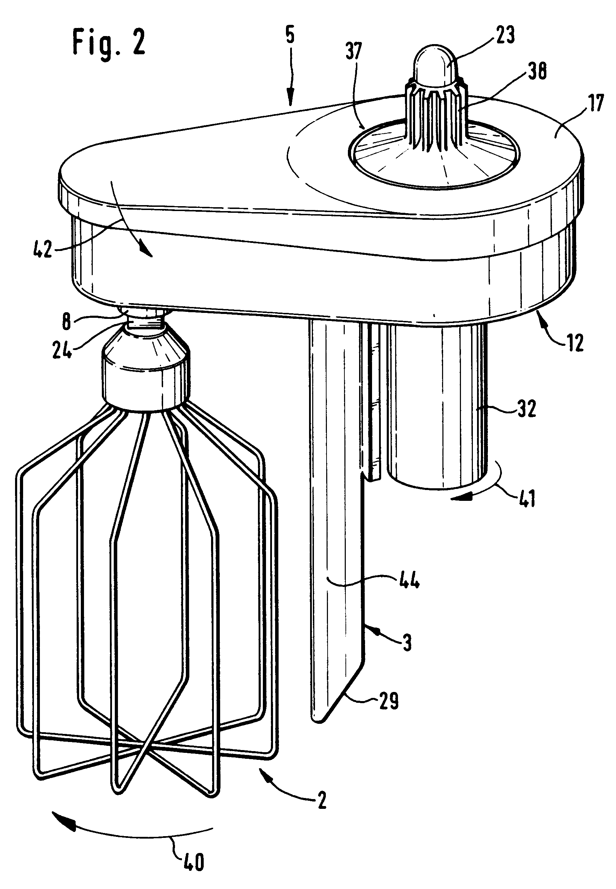

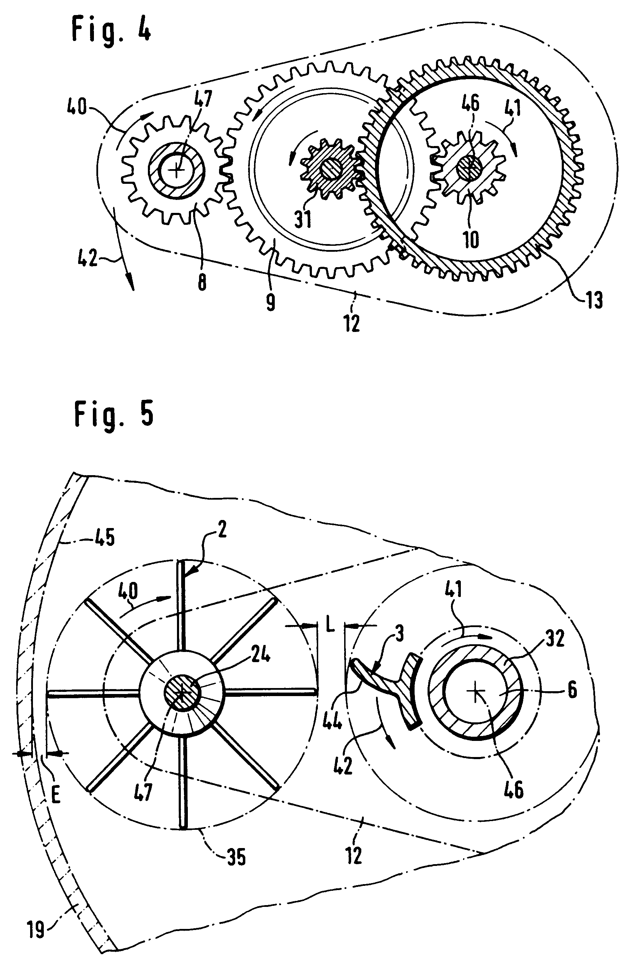

Wie aus den Figuren 2 bis 5 weiter hervorgeht, wird über das im Getriebegehäuse 12 angeordnete Ritzel 10, das Zwischenrad 9 und das Antriebsrad 8 die Ausgangswelle 24 mit dem zugehörigen ersten Arbeitswerkzeug 2, beispielsweise gemäß den Figuren 1 bis 3 einem Schneebesen, der aber auch durch einen Quirl oder ein ähnliches Arbeitswerkzeug ersetzt werden kann, gegenläufig zum zweiten Arbeitswerkzeug 3 angetrieben, das an der Unterseite des Bodens 18 des Getriebegehäuses 12 fest angeordnet ist und mit dem Getriebegehäuse 12 entgegengesetzt zum ersten Arbeitswerkzeug 2 gedreht wird. Das erste Arbeitswerkzeug 2 wird also, wie dies Fig. 2 deutlich zeigt, anhand der die Drehrichtung angebenden Pfeile 40, 41 im Uhrzeigersinn, der Abweiser 3 entgegen und das Getriebegehäuse 12 entgegengesetzt im Uhrzeigersinn gedreht.

Der Abweiser 3 weist nach Figuren 2 und 3 eine in etwa vertikal verlaufende Innenkante 29 auf, die in etwa mit gleichem Abstand parallel zur Oberfläche 30 des Schachtes 11 (Fig. 3) verläuft. Hierdurch wird das an der Oberfläche 30 des Schachtes 11 haftende Nahrungsmittelgut (nicht dargestellt) ständig entfernt und wieder dem Schneebesen 2 zugeführt. Dadurch, daß der Schneebesen 2 gemäß den Figuren 1 bis 5 im Uhrzeigersinn und der Abweiser 3 entgegen dem Uhrzeigersinn gedreht werden, wird, wenn es sich bei dem Nahrungsmittel um Sahne handelt, besonders intensiv Luft in diese eingebracht, da der Abweiser 3 die Nahrungsmittel besonders schlagartig dem Schneebesen bzw. dem ersten Arbeitswerkzeug 2 zuführt und dadurch die Nahrungsmittel besonders schlagartig aufgewirbelt und mit Luft vermischt werden. Dabei ist es besonders vorteilhaft, daß der Abweiser 3 radial nach außen und mit seiner in Drehrichtung vorderen Stirnfläche 44 im Uhrzeigersinn hin gekrümmt ist. Durch diesen Krümmungsverlauf der Stirnfläche 44 werden die Nahrungsmittel besser und schneller zum ersten Arbeitswerkzeug 2 hin befördert.

Das erste Arbeitswerkzeug 2 wird mit dem Abstand E dicht am Außenrand des Behälters 19 und das zweite Arbeitswerkzeug 3 mit dem Abstand X dicht am Außenumfang 30 des Schachtes 11 und mit dem Spalt L etwas weiter zum ersten Arbeitswerkzeug 2 entlanggeführt. Hierdurch wird erreicht, daß das außen und innen im Behälter 12 befindliche Nahrungsmittelgut sofort wieder von dem ersten bzw. zweiten Arbeitswerkzeug 2, 3 erfaßt und bearbeitet wird.

Nach Fig. 3 verläuft die Rotationskontur 35 des Schneebesens 2 im wesentlichen mit dem Abstand E zu der Innenwand 45 am Außenumfang des Behälters 19 parallel.

## Patentansprüche

1. Schlag- und Mischeinrichtung für eine Vielzweckküchenmaschine mit mindestens einem um die Mittelachse (46) eines Behälters (19) und um seine eigene Achse (47) drehbaren ersten Arbeitswerkzeug (2), das zum Zubereiten, Rühren, Schlagen und/oder Zerkleinern von Nahrungsmitteln dient, mit einer von einem Elektromotor angetriebenen, in den Behälter (19) vom Boden (25) her über einen rohrförmigen Schacht (11) hineinragenden Hauptantriebswelle (6) und mit einem in einem Getriebegehäuse (12) aufgenommenen, um die Mittelachse (46) drehendes Getriebe (4), wobei eine Welle (32) des Getriebes (4) mit der Hauptantriebswelle (6) und ein Antriebsrad (8) des Getriebes (4) mit dem ersten Arbeitswerkzeug (2) kuppelbar ist, und wobei das erste Arbeitswerkzeug (2) mit einem zweiten, als Abweiser ausgebildeten Arbeitswerkzeug (3) zusammenwirkt, das am Getriebegehäuse (12) ausgebildet ist,
**dadurch gekennzeichnet**,
daß der Abweiser (3) zwischen dem ersten Arbeitswerkzeug (2) und dem Schacht (11) angeordnet ist, daß das erste Arbeitswerkzeug (2) an den Konturenverlauf am Übergang vom Boden zur Außenwandung des Behälters (19) im wesentlichen angepaßt ist, daß der Abweiser (3) mit seiner dem Schacht (11) benachbarten Seite der Kontur des Schachtes (11) in geringem Abstand folgt und daß der rohrförmige Schacht (11) sich vom Boden des Behälters (19) nach oben verjüngt bzw. erweitert.

2. Schlag- und Mischeinrichtung nach Anspruch 1,
**dadurch gekennzeichnet**,
daß das erste Arbeitswerkzeug (2) gegenläufig zum dem am Getriebegehäuse (12) angeordneten, mit diesem umlaufenden Abweiser (3) antreibbar ist.

3. Schlag- und Mischeinrichtungnach Anspruch 2,
**dadurch gekennzeichnet**,
daß das erste Arbeitswerkzeug (2) über die Ausgangswelle (24) mit einem Antriebsrad (8) antriebsverbunden ist, das über ein Zwischenrad (9) mit einem auf der Hauptantriebsachse (6) angeordneten Ritzel (10) antriebsverbunden ist.

4. Schlag- und Mischeinrichtung nach Anspruch 1,
**dadurch gekennzeichnet**,
daß der rohrförmige Schacht (11) sich zum Boden (25) des Behälters (19) hin kegelstumpfartig erweitert.

5. Schlag- und Mischeinrichtung nach Anspruch 1,
**dadurch gekennzeichnet**,
daß der rohrförmige Schacht (11) im Bereich des Bodens (25) aus einem kegelstumpfartig ausgebildeten Schachtteil (27) und einem sich daran anschließenden zylinderförmigen Rohrteil (28) besteht.

6. Schlag- und Mischeinrichtung nach Anspruch 1,
**dadurch gekennzeichnet**,
daß der Abweiser (3) eine Innenkante (29) aufweist, die in etwa mit gleichem Abstand bzw. parallel zum Außenumfang des rohrförmigen Schachtes (11) verläuft.

7. Schlag- und Mischeinrichtung nach Anspruch 1,
**dadurch gekennzeichnet**,
daß das in dem Getriebegehäuse (12) aufgenommene Getriebe (4) aus dem Antriebsrad (9) zum Anschluß der als Steckwelle ausgebildeten Ausgangswelle (24) für das erste Arbeitswerkzeug (2), dem Zwischenrad (9) und dem auf der Hauptantriebsachse (6) angeordneten Ritzel (10) besteht, wobei das Zwischenrad (9) über ein mit diesem fest verbundenes zweites Ritzel (31) und ein weiteres, oberhalb des ersten Ritzels (10) angeordnetes viertes feststehendes Zahnrad (13) zum Antrieb des Getriebegehäuses (12) in Antriebsverbindung steht.

8. Schlag- und Mischeinrichtung nach Anspruch 7,
**dadurch gekennzeichnet**,
daß das vierte Zahnrad (13) im Deckel (14) der Küchenmaschine (1) und auf einem Zapfen (15) des ersten Ritzels (10) gelagert ist und daß das Zwischenrad (9) auf einer Achse (16) drehbar gelagert ist, die mit ihrem einen Ende im Deckel (17) und mit ihrem anderen Ende im Boden (18) des Getriebegehäuses (12) aufgenommen ist.

9. Schlag- und Mischeinrichtung nach Anspruch 7,
**dadurch gekennzeichnet**,
daß das am Zwischenrad (9) ausgebildete Ritzel (31) im Getriebegehäuse (12) auf dem vierten feststehenden Zahnrad (13) abrollt und das Getriebegehäuse (12) antreibt, daß das Übersetzungverhältnis zwischen dem auf der Hauptantriebswelle (6) angeordneten Ritzel (10) des Getriebes (4) und dem Zwischenrad (9) mindestens 1:2 groß ist und daß das am Getriebegehäuse (12) angeordnete Ritzel (10) gleichlaufend zum ersten Arbeitswerkzeug (2) angetrieben wird.

10. Schlag- und Mischeinrichtung nach Anspruch 1,
**dadurch gekennzeichnet**,
daß zwischen dem ersten (2) und zweiten (3) Arbeitswerkzeug ein Spalt (L) vorgesehen ist, der etwa doppelt so groß ist wie der Spalt (E) zwischen der Außenwand des Behälters (19) und der Rotationskontur des ersten Arbeitswerkzeuges (2).

11. Schlag- und Mischeinrichtung nach Anspruch 1,
**dadurch gekennzeichnet**,
daß der Abweiser (3) gegenüber der Hohlwelle (32) radial nach außen verläuft und daß die in Drehrichtung (42) vordere Stirnfläche (44) des Abweisers (3) entgegen der Drehrichtung (42) gekrümmt verläuft.

## Claims

1. A beating and mixing device for a multipurpose food processor, with at least one first processing tool (2) rotatable about the central axis (46) of a container (19) and about its own axis (47) and serving to prepare, mix, beat and/or comminute food items, with a main drive shaft (6) powered by an electric motor and extending into the container (19) from the bottom (25) through a tubular well (11), and with a gearing (4) received in a gear casing (12) and rotating about the central axis (46), the gearing (4) having a shaft (32) adapted to be coupled to the main drive shaft (6), the gearing (4) further having a drive gear (8) adapted to be coupled to the first processing tool (2), and the first processing tool (2) cooperating with a second processing tool (3) configured as a deflector formed on the gear casing (12),
**characterized in that** the deflector (3) is arranged between the first processing tool (2) and the well (11), that the first processing tool (2) is essentially adapted to the contour of the transition area between the bottom and the outer wall of the container (19), that the side of the deflector (3) adjacent to the well (11) follows the contour of the well (11) at a small relative distance, and that the tubular well (11) tapers or widens in an upward direction from the bottom of the container (19).

2. A beating and mixing device as claimed in claim 1,
**characterized in that** the first processing tool (2) is driveable in a direction opposite to the deflector (3) disposed at the gear casing (12) and rotating therewith.

3. A beating and mixing device as claimed in claim 2,
**characterized in that** the first processing tool (2) is in driving relationship to the drive gear (8) through the output shaft (24), the drive gear (8) being in driving relationship to a pinion (10) disposed on the main drive shaft (6) through an intermediate gear (9).

4. A beating and mixing device as claimed in claim 1,
**characterized in that** the tubular well (11) widens in a frusto-conical fashion towards the bottom (25) of the container (19).

5. A beating and mixing device as claimed in claim 1,
**characterized in that** the tubular well (11) is comprised of a well section (27) shaped in the manner of the frustum of a cone in the area of the bottom (25), and of a cylindrical tube section (28) contiguous thereto.

6. A beating and mixing device as claimed in claim 1,
**characterized in that** the deflector (3) includes an inner edge (29) extending approximately equidistantly or parallel to the outer circumference of the tubular well (11).

7. A beating and mixing device as claimed in claim 1,
**characterized in that** the gearing (4) received in the gear casing (12) is comprised of the drive gear (8) for connection of the output shaft (24) configured as a plug-in shaft for the first processing tool (2), of the intermediate gear (9), and of the pinion (10) arranged on the main drive shaft (6), with the intermediate gear (9) being drivingly engaged by means of a second pinion (31) fixedly secured thereto and a further fourth, stationary gear (13) arranged above the first pinion (10) for driving the gear casing (12).

8. A beating and mixing device as claimed in claim 7,
**characterized in that** the fourth gear (13) is supported in the cover (14) of the food processor (1) and on a pin (15) of the first pinion (10), and that the intermediate gear (9) is rotatably mounted on an axle (16) having its one end received in the cover (17) and its other end in the bottom (18) of the gear casing (12).

9. A beating and mixing device as claimed in claim 7,
**characterized in that** the pinion (31) formed on the intermediate gear (9) in the gear casing (12) rolls in intermeshing engagement with the fourth stationary gear (13) and drives the gear casing (12), that the transmission ratio of the gearing (4) pinion (10) arranged on the main drive shaft (6) to the intermediate gear (9) is at least 1:2, and that the pinion (10) disposed at the gear casing (12) is driven in the same direction as the first processing tool (2).

10. A beating and mixing device as claimed in claim 1,
**characterized in that** between the first (2) and the second (3) processing tool a gap (L) is provided which is approximately twice as large as the gap (E) between the outer wall of the container (19) and the rotation contour of the first processing tool (2).

11. A beating and mixing device as claimed in claim 1,
**characterized in that** the deflector (3) extends radially outwardly relative to the hollow shaft (32), and that the front end face (44) of the deflector (3), when viewed in the direction of rotation (42), is curved in a direction opposite to the direction of rotation (42).

## Revendications

1. Dispositif batteur-mélangeur pour robot de cuisine, comportant au moins un premier outil de travail (2) qui peut tourner autour de l'axe médian (46) d'un récipient (19) et autour de son propre axe géométrique (47), et qui sert à préparer, mélanger, battre et/ou broyer des denrées alimentaires, comportant un arbre d'entraînement principal (6) entraîné par un moteur électrique et pénétrant dans le récipient (19) depuis le fond (29) par l'intermédiaire d'un puits tubulaire (11) et comportant un mécanisme (4) logé dans un carter de mécanisme (12) et tournant autour de l'axe médian (46), dispositif dans lequel un arbre (32) du mécanisme (4) peut être couplé avec l'arbre d'entraînement principal, (6) et une roue d'entraînement (8) du mécanisme, l'être avec le premier outil de travail (2), et dans lequel le premier outil de travail (2) collabore avec un second outil de travail (3) qui est conçu sous forme de déflecteur et qui est prévu sur le carter (12) du mécanisme,
caractérisé
par le fait que le déflecteur (3) est disposé entre le premier outil de travail (2) et le puits (11), que le premier outil de travail (2) est essentiellement adapté à l'allure du contour à la transition entre le fond et la paroi extérieure du récipient (19), que, par son côté proche du puits (11), le déflecteur (3) suit à faible distance le contour du puits (11) et que le puits tubulaire (11) va, depuis le fond du récipient (19), vers le haut en se rétrécissant ou en s'élargissant.

2. Dispositif batteur-mélangeur selon la revendication 1,
caractérisé
par le fait que le premier outil de travail (2) peut être entraîné en sens inverse du déflecteur (3), disposé sur le carter (12) du mécanisme et tournant avec ce carter.

3. Dispositif batteur-mélangeur selon la revendication 2,
caractérisé
par le fait que le premier outil de travail (2) est, au point de vue entraînement, lié, par l'intermédiaire de l'arbre de sortie (24), à une roue d'entraînement (8) qui est liée, au point de vue entraînement, par l'intermédiaire d'une roue intermédiaire (9), à un pignon (10) disposé sur l'axe d'entraînement principal (6).

4. Dispositif batteur-mélangeur selon la revendication 1,
caractérisé
par le fait que le puits tubulaire (11) s'élargit à la façon d'un tronc de cône en allant vers le haut (25) du récipient (19).

5. Dispositif batteur-mélangeur selon la revendication 1,
caractérisé
par le fait que le puits tubulaire est constitué, au voisinage du fond (25), d'une partie formant puits (27) en forme de tronc de cône et d'une partie tubulaire cylindrique (28) qui s'y raccorde.

6. Dispositif batteur-mélangeur selon la revendication 1,
caractérisé
par le fait que le déflecteur (3) présente un bord intérieur (29) qui passe à peu près à égale distance de, ou parallèlement à, la périphérie extérieure du puits tubulaire (11).

7. Dispositif batteur-mélangeur selon la revendication 1,
caractérisé
par le fait que le mécanisme (4) logé dans le carter du mécanisme (12) est constitué de la roue d'entraînement (9) pour le raccordement de l'arbre de sortie (24), conçu sous forme d'arbre enfichable, pour le premier outil de travail (2), de la roue intermédiaire (9) et du pignon (10) disposé sur l'axe d'entraînement principal (6), la roue intermédiaire (9) étant reliée, au point de vue entraînement, pour l'entraînement du carter de mécanisme (12), par l'intermédiaire d'un second pignon (31) solidarisé avec elle et d'une autre roue dentée fixe (13), la quatrième, disposée au-dessus du premier pignon (10).

8. Dispositif batteur-mélangeur selon la revendication 7,
caractérisé
par le fait que la quatrième roue dentée (13) a sa portée dans le couvercle (14) du robot de cuisine (1) et sur un pivot (15) du premier pignon (10) et que la roue intermédiaire (9) porte, avec liberté de rotation, sur un axe (16) qui est reçu, par l'une de ses extrémités, dans le couvercle (17) et, par son autre extrémité, dans le fond (18) du carter de mécanisme (12).

9. Dispositif batteur-mélangeur selon la revendication 7,
caractérisé
par le fait que le pignon (31) formé sur la roue intermédiaire (9) roule, dans le carter de mécanisme (12), sur la quatrième roue dentée (13), fixe, et entraîne le carter de mécanisme (12), que le rapport de réduction entre le pignon (10), disposé sur l'arbre d'entraînement principal (6), du mécanisme (4) et la roue intermédiaire (9) vaut au moins 1:2 et que le pignon (10) disposé dans le carter de mécanisme (12) tourne dans le même sens que le premier outil de travail (2).

10. Dispositif batteur-mélangeur selon la revendication 1,
caractérisé
par le fait qu'entre le premier (2) et le second (3) outils de travail est prévu un jeu (L) qui est à peu près le double du jeu (E) existant entre la paroi extérieure du récipient (19) et l'enveloppe de la rotation du premier outil de travail (2).

11. Dispositif batteur-mélangeur selon la revendication 1,
caractérisé
par le fait que, par rapport à l'arbre creux (32), le déflecteur (3) est orienté vers l'extérieur et que la surface frontale (44), à l'avant dans le sens de la rotation (42), du déflecteur (33) est incurvée en sens inverse du sens de rotation (42).
